# EUROPÄISCHE PATENTSCHRIFT

(11) **EP 2 007 612 B1**
(45) Veröffentlichungstag und Bekanntmachung des Hinweises auf die Patenterteilung: **01.09.2010**
(21) Anmeldenummer: 07727194.8
(22) Anmeldetag: 22.03.2007
(51) Int. Cl.: B60W 10/06, B60W 20/00

(54) **DEFINIERTER VERBRENNUNGSMOTORBETRIEB BEI FAHRZEUGEN MIT HYBRIDANTRIEB**
DEFINED INTERNAL COMBUSTION ENGINE OPERATION FOR VEHICLES WITH HYBRID DRIVE
FONCTIONNEMENT DÉFINI DU MOTEUR À COMBUSTION INTERNE DANS DES VÉHICULES À ENTRAÎNEMENT HYBRIDE

(30) Priorität: 10.04.2006 DE 102006016810
(43) Veröffentlichungstag der Anmeldung: 31.12.2008
(73) Patentinhaber: Robert Bosch GmbH, 70442 Stuttgart (DE)
(72) Erfinder: SCHNAIBEL, Eberhard, 71282 Hemmingen (DE); JOOS, Klaus, 74399 Walheim (DE); WEHMEIER, Kersten, 71640 Ludwigsburg (DE); TUMBACK, Stefan, 70469 Stuttgart (DE); KESCH, Bernd, 71282 Hemmingen (DE); SCHENK, Rene, 71732 Tamm (DE); STREIB, Martin, 71665 Vaihingen (DE); BAEUERLE, Peter, 71636 Ludwigsburg (DE); MANN, Karsten, 70469 Stuttgart (DE); HUBER, Thomas, 74915 Daisbach (DE)
(86) Internationale Anmeldenummer: PCT/EP2007/052718
(87) Internationale Veröffentlichungsnummer: WO 2007/115917

(56) Entgegenhaltungen:
- EP-A2- 0 965 475
- EP-B1- 1 472 108
- DE-A1- 10 046 986
- US-A- 5 806 617

## Beschreibung

### Stand der Technik

Verschiedene Funktionalitäten innerhalb einer Steuerung für Verbrennungskraftmaschinen, wie zum Beispiele Diagnosen oder Adaptionen, benötigen definierte Betriebszustände der Verbrennungskraftmaschine wie zum Beispiel Leerlaufbetrieb oder bestimmte Last/Drehzahlprofile um ablaufen zu können. Treten diese Betriebszustände während eines Fahrzyklus's nicht auf, können auch die Funktionen nicht ablaufen.

Aus DE 10 2004 0445 507 A1, Anmeldetag 15.09.2004, ist ein Verfahren zum Betreiben eines Fahrzeug-Antriebs und eine Vorrichtung zur Durchführung des Verfahrens bekannt. Es wird ein Verfahren zum Betreiben eines Fahrzeug-Antriebs offenbart, wobei der Fahrzeug-Antrieb wenigstens einen Verbrennungsmotor und wenigstens eine mit dem wenigstens einen Verbrennungsmotor mechanisch gekoppelte Elektromaschine sowie mit einem mit der Elektromaschine und/oder dem Verbrennungsmotor wirkverbundenen Energiespeicher aufweist. Der wenigstens eine Verbrennungsmotor und die wenigstens eine Elektromaschine erzeugen ein angefordertes Antriebs-Solldrehmoment Mₛₒₗₗ im Wesentlichen gemeinsam. Ein angefordertes optimales Solldrehmoment M_{V}, M_{VM soll opt} des Verbrennungsmotors ist auf ein optimiertes Minimalmoment M_{VM min opt} oberhalb eines Verbrennungsmotorminimalmomentes M_{VM min} und/oder ein optimiertes Maximalmoment M_{VM max opt} unterhalb eines Verbrennungsmotormaximalmomentes M_{VM max} begrenzt. Eine Änderungsgeschwindigkeit des optimalen Solldrehmonientes M_{VM opt} des Verbrennungsmotors ist begrenzt.

Bei Fahrzeugen mit Hybridantrieb besteht ein Ziel darin, die Verbrennungskraftmaschine im Bereich günstiger Wirkungsgrade zu betreiben, bei Stillstand des Fahrzeuges bzw. bei geringen Fahrzeuggeschwindigkeiten die Verbrennungskraftmaschine abzuschalten und elektrisch angetrieben zu fahren sowie Bremsenergie durch Rekuperation zu nutzen. Bei Parallelhybriden erfolgt eine Addition der Drehmomente der Verbrennungskraftmaschine und der Drehmomente einer oder mehrerer Elektroantriebe zu einem Antriebsstrangmoment. Die Elektroantriebe können zum Beispiel als Startergeneratoren mit dem Riementrieb oder mit der Kurbelwelle der Verbrennungskraftmaschine verbünden sein. Bei modernen Verbrennungskraftmaschinen können verschiedene Betriebspunkte im Hinblick auf Abgasemissionen und Kraftstoffverbrauch problematisch sein. Bei fremdgezündeten Verbrennungskraftmaschinen können zum Beispiel hohe Drehmomente eine Abweichung vom stöchiometrischen Luft-Kraftstoffgemisch erfordern, ebenso kann eine Volllastanreicherung notwendig sein, um Bauteiltemperaturen in erlaubten Grenzen zu halten. Um sehr kleine Drehmomente einzustellen, ist eine Verschiebung des Zündwinkels an der Verbrennungskraftmaschine in Richtung spät üblich, die auch eingesetzt wird, um einen Drehmomentvorhalt zu erzielen, um zum Beispiel aus dem Leerlauf heraus einen schnelleren Drehmömentenaufbau zu ermöglichen. Mit der Zündwinkelverschiebung verschlechtert sich allerdings der Wirkungsgrad. In Verbindung mit Schubabschaltungen können erhöhte Stickoxidemissionen durch Sauerstoffüberschuss im Katalysator entstehen. Ebenso ist beim Betrieb einer selbstzündenden Verbrennungskraftmaschine bei hohen Drehmomenten mit erhöhten Schwärzungszahlungen und Stickoxidemissionen zu rechnen, bei geringen Drehmomenten der selbstzündenden Verbrennungskraftmaschine besteht hingegen die Gefahr, dass der Katalysator auskühlt.

### Offenbarung der Erfindung

Der vorliegenden Erfindung liegt die Aufgabe zugrunde, definierte Betriebszustände der Verbrennungskraftmaschine in einem Fahrzeug mit Hybridantrieb gezielt einzustellen, wobei gleichzeitig ein gefordertes Antriebsstrangmoment und eine Fahrzeuggeschwindigkeit beibehalten werden.

Erfindungsgemäß wird diese Aufgabe dadurch gelöst, dass die Motorsteuerung bzw. das Motorsteuergerät der Verbrennungskraftmaschine nicht mehr auf ein Auftreten bestimmter Betriebszustände der Verbrennungskraftmaschine warten muss, um bestimmte Funktionen wie zum Beispiele Diagnosen oder Adaptionen, ablaufen zu lassen, sondern diese einen Ablauf bestimmter Funktionen ermöglichende Betriebszustände aktiv anfordert. Durch dieses Vorgehen kann zum Beispiel der Ablauf von Diagnosevorgängen bzw. Adaptionsoperationen beschleunigt werden und insbesondere ein Abbruch eines laufenden Diagnosevorgangs vermieden werden. Dazu fordern Funktionen der Motorsteuerung bzw. des Motorsteuergerätes vorteilhafte Betriebsbedingungen für die Verbrennungskraftmaschine an, die an der Verbrennungskraftmaschine und dem mindestens einen elektrischen Antrieb eines Hybridantriebs durch geeignete Ansteuerungen so eingestellt werden, dass trotz Ablauf der Funktionen eine geforderte Fahrzeuggeschwindigkeit eingehalten und ein gefordertes Antriebsstrangmoment am Triebstrang des Fahrzeugs mit Hybridantrieb bevorzugt einem parallelen Hybridantrieb, erzeugt wird.

Im Allgemeinen umfasst ein Antriebsstrang, insbesondere eines Parallelhybridantriebes eines Fahrzeugs einer Verbrennungskraftmaschine sowie mindestens einen elektrischen Antrieb sowie ein Getriebe mit Kupplung. Der Verbrennungskraftmaschine kann jeweils ein eigenes Steuergerät zugeordnet sein ebenso der Elektromaschine und dem Getriebe. Ferner ist eine Hybrid-Steuerung so zum Beispiel ein Hybridkoordinator vorgesehen, welcher die Koordination der Verbrennungskraftmaschine, des mindestens einen elektrischen Antriebes sowie des Fahrzeuggetriebes übernimmt. Die Motorsteuerung oder das Motorsteuergerät fordert definierte Betriebsbedingungen für die Verbrennungskraftmaschine an, die vom Hybridkoordinator durch geeignete Ansteuerung des mindestens einen elektrischen Antriebes und des Fahrzeuggetriebes derart eingestellt werden, dass das geforderte Antriebsstrangmoment M_out bei einer geforderten Antriebsstrangdrehzal n_out aufgebracht wird. Das geforderte Antriebsstrangmoment M_out bzw. die geforderte Antriebsstrangdrehzahl n_out werden dabei abhängig von der Geschwindigkeit des Fahrzeugs, dem Reifendurchmesser und der Differenzialübersetzung eingestellt.

Zu einem der Verbrennungskraftmaschine vorgegebenen Moment kann zum Beispiel durch den Hybridkoordinator ein Moment für den mindestens einen E-Antrieb so vorgegeben werden, dass ein gefordertes Antriebsstrangmoment M_out aufgebracht wird. Zur Einstellung der Drehzahl der Verbrennungskraftmaschine kann zum Beispiel bei einem automatisierten Schaltgetriebe die aktuell eingelegte Gangstufe oder der aktuell eingelegte Gang durch die Getriebesteuerung verändert werden. Dadurch ergibt sich bei gleich bleibender Fahrzeuggeschwindigkeit eine andere Drehzahl der Verbrennungskraftmaschine, die möglicherweise näher an der Vorgabe für deren Drehzahl liegt.

Angesichts des skizzierten technischen Problems ist hinsichtlich der Möglichkeit des Ablaufes von Funktionen zur Diagnose oder zur Adaption eine Information dahingehenderforderlich, ob in Frage stehende Funktionen ablaufen könnten, unabhängig von einem zufällig gerade eingestellten Betriebspunkt oder einer zufällig eingestellten Leistungsverteilung. Zur Aktivierung der jeweiligen Funktion ist eine Information dahingehend erforderlich, ob ein zum Ablauf der Funktion geeigneter Betriebspunkt durch eine andere Leistungsverteilung innerhalb der Hybridsteuerung erreicht werden könnte. Damit haben dann alle in Frage kommenden Funktionen die Möglichkeit, festzustellen, ob ein Ablauf sinnvoll ist oder nicht. Diejenigen der Diagnose bzw. Adaptionsfunktionen, die ablaufen könnten, können ihre jeweilige Laufbereitschaft einem Betriebsartenkoordinator oder einem Scheduler ihre Laufbereitschaft anzeigen oder eine Freigabe zum Lauf beantragen.

In einer ersten Ausführungsvariante übermittelt der Hybridkoordinator ständig den jeweils möglichen Betriebsbereich. Jede Funktion überprüft ob ihre Anforderungen mit diesem möglichen Betriebsbereich kompatibel sind oder nicht. Diese Überprüfung kann sowohl von der Funktion als auch über einen Scheduler für jede Funktion vorgenommen werden. Der Scheduler wählt dann aus den kompatiblen Funktionen diejenige aus, welche die höchste Priorität aufweist. Diese ausgewählte Funktion übermittelt die konkrete Betriebspunktanforderung an den Hybridkoordinator. Der Hybridkoordinator verändert darauf hin die Einstellungen so, dass der gewählte Arbeitspunkt der Verbrennungskraftmaschine innerhalb des Hybridantriebes erreicht wird. Ändert sich der Fahrzustand, zum Beispiel ausgelöst durch einen Fahrerwunsch, derart, dass der angeforderte Betriebspunkt nicht mehr erreicht werden kann, wird der mögliche Betriebsbereich dementsprechend angepasst und die betroffene Funktion stellt gegebenenfalls ihre Aktivitäten ein.

In einer weiteren Ausführungsvariante kann der Scheduler die jeweils höchst priorisierte Funktion ermitteln. Mit den möglichen Betriebspunkten, an denen diese Funktion ablaufen kann, fragt der Scheduler den Hybridkoordinator ab, ob dies möglich ist. Akzeptiert der Hybridkoordinator dies, wird die Funktion gestartet und die entsprechende Betriebspunktanforderung der höchst priorisierten Funktion wird aktiv. Akzeptiert der Hybridkoordinator dies hingegen nicht, kann der Scheduler seine Anfrage mit den Betriebsparametern einer anderen Funktion wiederholen.

Von Vorteil bei diesen Ausführungsvarianten ist der umstand, dass die existierende Infrastruktur an der Verbrennungskraftmaschine nur unwesentlich zu erweitern ist. Weiterhin ist oder sind die notwendigen Schnittstellen weitestgehend generisch Die Schnittstellen sind nicht auf spezielle Diagnose oder Adaptionsfunktionen vorgeschnitten, sondern lassen sich für eine Vielzahl von Funktionen verwenden. Aufgrund dessen kann das Vorhalten einer Vielzahl von Schnittstellen entfallen, was mit einem zusätzlichen Implementations- und Verdrahtungsaufwand einherginge.

### Zeichnung

Anhand der Zeichnung wird die Erfindung nachstehend eingehender beschrieben.

Es zeigt:
- Figur 1: die wesentlichen Komponenten eines Antriebsstrangs eines Parallelhybridantrie- bes eines Fahrzeuges,
- Figur 2: eine erste Ausführungsvariante eines Hybridkoordinators zur Abfrage möglicher anzufahrender Betriebszustände in Bezug auf die Verbrennungskraftmaschine des Hybridantriebes,
- Figur 3: eine Ausführungsvariante der Darstellung gemäß Figur 2, in welcher ein Aus- tausch hinsichtlich möglicher und angeforderter Betriebszustände direkt zwi- schen dem Hybridkoordinator und einem Scheduler erfolgt und
- Figur 4: eine weitere Ausführungsvariante des in Figur 3 dargestellten Hybridkoordina- tors mit Direktansprache des Schedulers und unmittelbarem Datenaustausch zwischen den Funktionen.

### Ausführungsvarianten

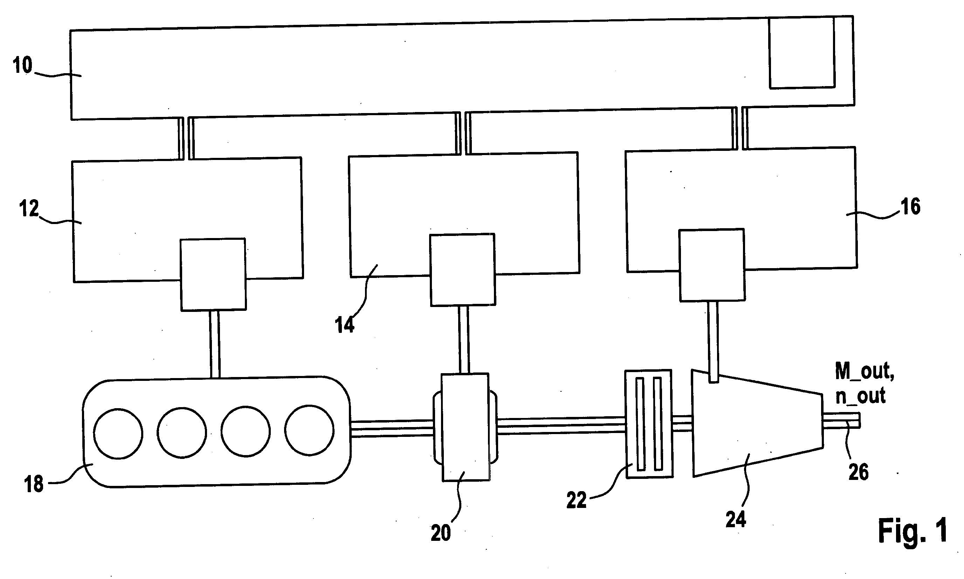

Der Darstellung gemäß Figur 1 sind die wesentlichen Komponenten eines Hybridantriebes, insbesondere eines Parallelhybridantriebes eines Fahrzeugs zu entnehmen.

Ein Hybridkoordinator 10 steht sowohl in Verbindung mit einem Steuergerät 12 für eine Verbrennungskraftmaschine 18 als auch in Verbindung mit einem Steuergerät 14 für mindestens einen E-Antrieb 20 sowie des weiteren mit einem Steuergerät 16 für ein Fahrzeuggetriebe 24. Eine Verbrennungskraftmaschine 18 ist in der in Figur 1 dargestellten Zeichnung mit dem mindestens einen E-Antrieb 20 starr gekoppelt. Zwischen dem mindestens einen E-Antrieb 20 und dem Fahrzeuggetriebe 24 befindet sich eine Kupplung 22, hier nur schematisch angedeutet. Auch zwischen der Verbrennungskraftmaschine 18 und dem mindestens einen E-Antrieb 20 kann eine Kupplung angeordnet sein. An der Abtriebsseite des Fahrzeuggetriebes 24 verläuft eine Antriebswelle 26, die in einen nicht weiter dargestellten Antriebsstrang eines Fahrzeugs mit Hybridantrieb übergeht. Ausgangsseitig liegen am Fahrzeuggetriebe 24 ein Getriebeausgangsmoment M_out sowie eine Getriebeausgangsdrehzahl n_out vor.

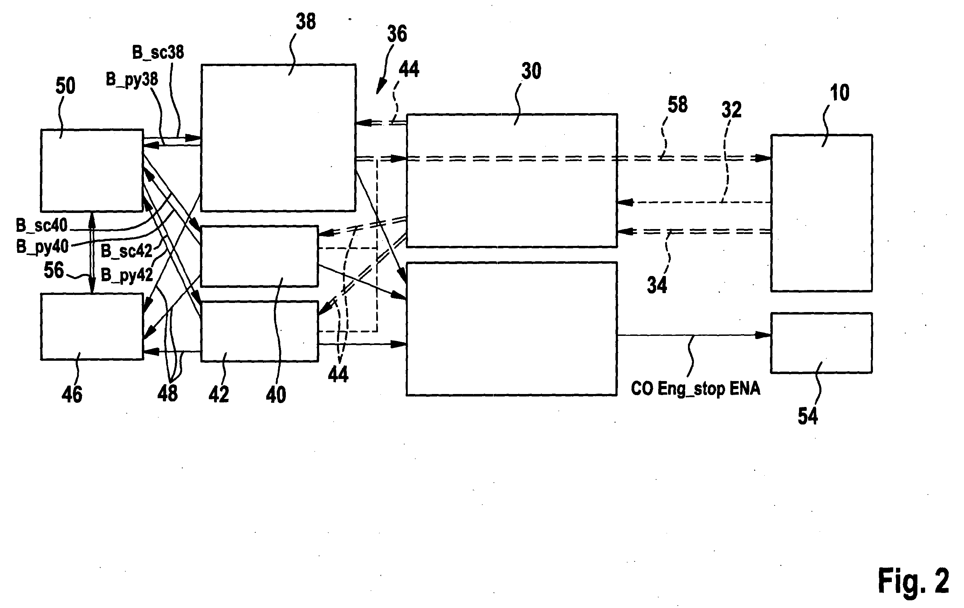

Figur 2 zeigte eine erste Ausführungsvariante eines Hybridkoordinators, der mit einem Koordinator 30 für die Verbrennungskraftmaschine 18 in Verbindung steht. Ein Hybridkoordinator 10 liefert mögliche Betriebszustände 34 an den Koordinator 30 der Verbrennungskraftmaschine 18. Der Koordinator 30 stellt die Information über mögliche Betriebszustände 34 über die aufbereiteten möglichen Betriebszuständen 44 einer ersten Funktion 38 bzw. einem ersten Funktionsblock 38, einer weiteren zweiten Funktion 40 und einer dritten Funktion 42 zur Verfügung. Anstelle der in Figur 1 dargestellten drei Funktionen 38, 40 und 42 wären auch eine Vielzahl weiterer Funktionen möglich, die hier nicht im einzelnen dargestellt sind. Der Hybridkoordinator 10 übermittelt ferner eine Momentenanforderung 32 an den Koordinator 30 der Verbrennungskraftmaschine 18.

Jede der Funktionen 38, 40, 42 ermittelt aufgrund der vom Koordinator 30 gemeldeten aufbereiteten Betriebszustände 44 die physikalische Laufbereitschaft und meldet diese über ein Flag B_sc 38, B_py 38 im Falle der ersten Funktion 38 an einen Scheduler 50. Falls die Funktionen bzw. Funktionsblöcke 38, 40, 42 über einen Direktzugriff 48 auf einen Betriebskoordinator 46 verfügen, können die Funktionen 38, 40, 42 auch in diesem ihre jeweilige Anforderung aktivieren.

Der Scheduler 50 (DSM) wählt aufgrund der erhaltenen Informationen über die Flags B_sc 38 im Falle der ersten Funktion 38, B_sc 40 im Falle der zweiten Funktion 40 sowie B_sc 42 im Falle der dritten Funktion 42 eine Funktion aus und teilt der jeweils ausgewählten der Funktionen 38, 40, 42 die getroffene Auswahl über Setzen eines Flags B_sc 38 bzw. B_sc 40 oder B_sc 42, jeweils funktionsspezifisch die Auswahl mit. Die Ausgewählte der Funktionen 38, 40, 42 übermittelt über den Koordinator 30 die tatsächliche Anforderung an den Hybridkoordinator 10. Der Hybridkoordinator 10 seinerseits stellt daraufhin die Momentenverteilung zwischen der Verbrennungskraftmaschine 18 und dem mindestens einen E-Antrieb 20 passend ein und ändert entsprechend der Momentenverteilung die an die Verbrennungskraftmaschine 18 gerichtete Momentenanforderung 32.

Kann der Hybridkoordinator 10 den gewünschten Betriebszustand nicht bereitstellen oder nicht mehr bereitstellen, was aufgrund einer Fahrerwunschanforderung auftreten kann, werden die möglichen Betriebszustände 34 angepasst. Eine Start/Stoppfreigabe kann einfache Funktionsidentifizierer FID_start oder FID_stopp verwenden, welche jeweils exklusiv zueinander sind. Diese werden der Entscheidung innerhalb einer Start- und Stoppfreigabe zugrunde gelegt.

Als Schnittstellen für die möglichen Betriebspunkte sind verschiedene Varianten denkbar: diese können zum Beispiel anhand des maximalen oder minimalen möglichen Drehmomentes sowie einer maximalen und minimalen möglichen Drehzahl gewählt werden. Es besteht die Möglichkeit, zum Beispiel mehrere Drehzahl/Momentenpaare zu bilden, die eine Kennfeldfläche aufspannen. Alternativ zu den angesprochenen Drehmomenten, können die maximale und die minimale Leistung der Verbrennungskraftmaschine 18 Eingang in die jeweils auszuwählenden Betriebspunkte finden.

Da häufig ein momentanes Drehmomentangebot für viele Funktionen nicht ausreichend ist, besteht auch die Möglichkeit, eine Information dahingehend zur Verfügung zu stellen, wie lange dieses Drehmoment bei aktuellen Randbedingungen aufrechterhalten werden könnte. Alternativ bietet sich an, die maximale Dauer für den jeweiligen Betriebsbereich als Eckpunkt zur Verfügung zu stellen. Eine durchaus sinnvolle Erweiterung besteht darin, den Scheduler 50 zusätzlich zum jeweils angeforderten Betriebspunkt über die jeweils zugehörige Priorität zu informieren. Die Prioritätsinformation kann im Hybridkoordinator 10 dazu verwendet werden, die Dringlichkeit der Anforderung einzuordnen und diese auch abzulehnen. Bei den angeforderten Betriebszuständen 58, die an den Hybridkoordinator 10 übermittelt werden, können auch eingeschränkte Betriebsbereiche anstelle nur jeweiliger diskreter Betriebspunkte ausgewählt werden, was dem Hybridkoordinator 10 einen größeren Entscheidungsspielraum lässt.

Mit Bezugszeichen 54 ist in der Darstellung gemäß Figur 2 ein Start/Stopp-Koordinator bezeichnet. Über einen bidirektionalen Datenaustausch 56 stehen der Scheduler 50 sowie der Betriebsartenkoordinator 46 übereinander in Verbindung, wobei der Betriebskoordinator 46 gegebenenfalls auch über Direktzugriffe 48 der jeweiligen Funktionen 38, 40 und 42 aktiviert werden kann.

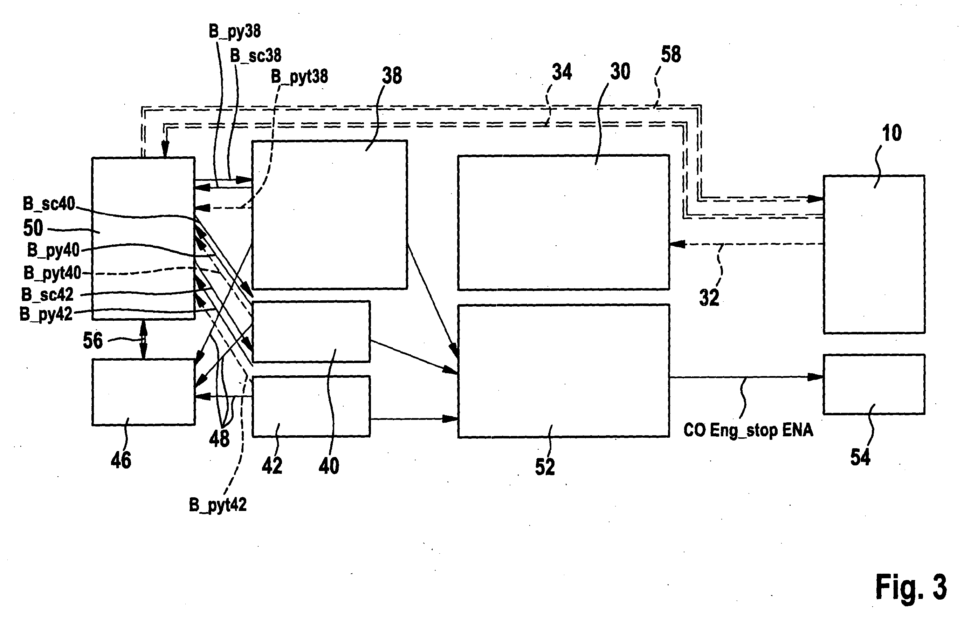

Der Darstellung gemäß Figur 3 ist eine alternative Ausführungsvariante der in Figur 2 dargestellten Funktionalität eines Hybridkoordinators zu entnehmen.

Aus der Darstellung gemäß Figur 3 geht hervor, dass der Hybridkoordinator 10 die Momentenanforderung 32 an den Koordinator 30 der Verbrennungskraftmaschine 18 versendet. Sowohl der Hybridkoordinator 10 als auch der Koordinator 30 der Verbrennungskraftmaschine 18 kann im Steuergerät 12 der Verbrennungskraftmaschine 18 enthalten sein. Gemäß der in Figur 3 dargestellten Ausführungsvariante einer Hybridantriebssteuerung, kommuniziert der Hybridkoordinator 10 direkt mit dem Scheduler 50. Der Hybridkoordinator 10 übermittelt mögliche Arbeits- bzw. Betriebspunkte hinsichtlich möglicher Betriebsstände 34 unmittelbar an den Scheduler 50 der seinerseits angeforderte Betriebszustände 58 unmittelbar an den Hybridkoordinator 10übermittelt und seinerseits im bidirektionalen Datenaustausch 56 mit dem Betriebsartenkoordinator 46 steht. Im Unterschied zur Ausführungsvariante gemäß der Darstellung in Figur 2 übermittelt jede der Funktionen 38, 40 bzw. 42 über ein entsprechendes Flag B_pyt 38, B_pyt 40 oder B_pyt 42 ihren Laufwunsch bei entsprechendem Betriebspunkt an dem Scheduler 50. Im Scheduler 50 liegen Informationen über die jeweils möglichen Betriebspunkte der Verbrennungskraftmaschine 18, übermittelt durch den Hybridkoordinator 10, vor. Der Scheduler 50 sucht diejenige der hier beispielhaft genannten drei Funktionen 38, 40 bzw. 42 aus, welche die höchste Priorität hat, die zu den jeweils möglichen Betriebszuständen 34, übermitteln durch den Hybridkoordinator 10, kompatibel ist.

Alternativ zu dieser Vorgehensweise kann auch eine jede dem Scheduler 50 (DSM) zugeordnete Funktion 38, 40 bzw. 42 ihre möglichen Betriebspunkte an den Scheduler 50 direkt übermitteln.

Für die ausgewählte Funktion, d.h. für die ein Betriebspunkt vorliegt, an dem die jeweilige Funktion 38, 40 bzw. 42 lauffähig ist und die die höchste Priorität aufweist, beantragt der Scheduler 50 einen Betriebszustand per Anforderung 58 beim Hybridkoordinator 10. Wird die Anforderung vom Hybridkoordinator 10 zugelassen, wird der jeweils durch den Scheduler 50 ausgewählten der Funktionen 38, 40 bzw. 42 über ein Flag B_sc 38, B_sc 40 bzw. B_sc42 die Freigabe übermittelt. Ferner werden gemäß der in Figur 3 dargestellten Ausführungsvariante über die Flags B_py 38, B_py 40 und B_py 42 von den Funktionen bzw. Funktionsblöcken38, 40, 42 die physikalische Laufbereitschaft an den Scheduler 50 übermittel.

Die Funktionen bzw. Funktionsblöcke 38, 40 bzw. 42 verfügen auch gemäß der in Figur 3 dargestellten Ausführungsvariante analog zur Ausführungsvariante gemäß Figur 2 über Direktzugriffe 48 auf den Betriebsartenkoordinator 46.

Darüber hinaus steht jede der Funktionen bzw. Funktionsblöcke 38, 40 bzw. 42 mit der Stoppfreigabe 52 in Verbindung, über welche gegebenenfalls über ein Signal CO Eng_stop.ENA dem Start/Stop-Koordinator 54 gegebenenfalls ein Start- oder Stoppsignal übermittelt wird. Über die Stoppfreigabe 52, den Start/Stopp-Koordinator 54 sowie das Signal CO_stop wird innerhalb eines leistungsverzweigten Hybridantriebes gesteuert, wann die Verbrennungskraftmaschine 18 zum Beispiel gänzlich abgestellt werden kann.

In der in Figur 3 dargestellten Ausführungsvariante der Steuerung eines Hybridantriebes wird die Priorität des Ablaufes von Funktionen 38, 40 bzw. 42 berücksichtigt. Damit wird gemäß der in Figur 3 dargestellten Ausführungsvariante eine Information hinsichtlich der Dringlichkeit des Ablaufs der jeweiligen Funktionen 38, 40 bzw. 42 an den übergeordneten Hybridkoordinator 10 übermittelt, was im Falle der Hybridsteuerung gemäß Figur 2 noch keine Berücksichtigung findet.

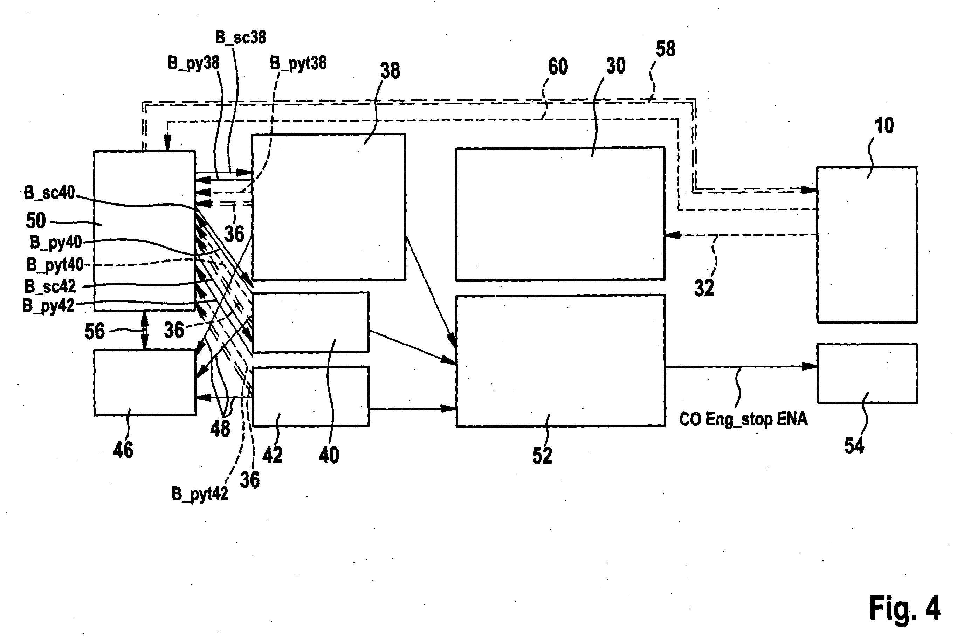

Während in der Ausführungsvariante gemäß Figur 2 aufbereitete mögliche Betriebszustände 36 vom Koordinator 30 über eine Rückmeldung 44 an die Funktionen 38, 40 bzw. 42 gemeldet werden, ist in einer weiteren Ausfiihrungsvariante, die im Zusammenhang mit Figur 4 dargestellt ist, denkbar, dass die einzelnen Funktionen 38, 40 bzw. 42 aufbereitete mögliche Betriebszustände 36 unmittelbar an den Scheduler 50 (DSM) übermitteln.

Figur 4 zeigt eine Ausführungsvariante die im Unterschied zu in Figur 1 dargestellten Ausführungsvariante aufbereitete mögliche Betriebszustände durch die Funktionen selbst an den Scheduler übermittelt.

Auch in der in Figur 4 dargestellten Ausführungsvariante geht vom Hybridkoordinator 10 die Momentenanforderun 32 an den Koordinator 30 der Verbrennungskraftmaschine 18. Über den Hybridkoordinator 10 werden Zustimmungssignale 60 an den Scheduler 50 übermittelt, von welchem wiederum der Hybridkoordinator 10 Informationen über angeforderte Betriebszustände 58 empfängt.

In der in Figur 4 dargestellten Ausführungsvariante übermitteln die hier beispielhaft herausgegriffenen 3 Funktionen 38, 40 bzw. 42 Informationen hinsichtlich ihrer physikalischen Laufbereitschaft durch die bereits erwähnten Flags B_py 38, B_py 40 und B_py 42 an den Scheduler 50 (DSM). Ferner übermitteln in der in Figur 4 dargestellten Ausführungsvariante die Funktionen bzw. die Funktionsblöcke 38, 40 bzw. 42 aufbereitete mögliche Betriebszustände 36 unmittelbar an den Scheduler 50. Des Weiteren werden in der Figur 4 dargestellten Ausführungsvariante eine Hybridantriebssteuerung die Flags B_pyt 38, B_pyt 40 bzw. B_pyt 42 zur Anzeige eines Laufwunsches bei gegebenem Betriebspunkt unmittelbar an den Scheduler 50 (DSM) übermittelt. Der Scheduler 50 (DSM) wählt die Funktion 38, 40 bzw. 42 mit der höchsten Priorität aus und beantragt den geforderten Betriebszustand 48 beim Hybridkoordinator 10. Da in der Ausführungsvariante gemäß Figur 4 keine Information über einen möglichen Betriebspunkt vorliegt, meldet der Hybridkoordinator 10 über die Zustimmung 60 an den Scheduler 50 (DSM) zurück, ob der angeforderte Betriebspunkt möglich ist. Ist dieser nicht möglich, verwirft der Scheduler 50 (DSM) seine Entscheidung und wählt eine andere Funktion aus den Funktionen 38, 40 bzw. 42 aus, für welche dann wiederum eine Anfrage beim Hybridkoordinator 10 durchgeführt wird. Alternativ könnte eine Information dahingehend, welche möglichen Betriebspunkte zu einer bestimmten Funktion 38, 40 bzw. 42 passen, auch beim Scheduler 50 (DSM) hinterlegt werden.

Der Vorteil der Ausführungsvariante gemäß Figur 4 ist darin zu erblicken, dass der Hybridkoordinator 10 dahingehend entlastet wird, dass keine allgemeinen Bereiche hinsichtlich möglicher Betriebspunkte zu berechnen sind. Eine Entscheidung innerhalb des Hybridkoordinators 10 fällt in diesem unter Zugrundelegung eines konkreten Betriebspunktes, der diesem über angeforderte Betriebszustände 58 durch den Scheduler 50 für eine bestimmte bereits ausgewählte Funktion übermittelt wird. Der Hybridkoordinator 10 entscheidet demnach lediglich, ob eine Zustimmung 60 angesichts des Fahrzustandes des Fahrzeugs möglich ist oder nicht. Unter Umständen sind mehrere Versuche durchzuführen, bis eine bei den jeweils gegebenen Betriebszuständen der Verbrennungskraftmaschine 18 kompatibel laufende der Funktionen 38, 40 und 42 ermittelt ist.

Auch in der in Figur 4 dargestellten Ausführungsvariante stehen die Funktionen bzw. Funktionsblöcke 38, 40 bzw. 42 über einen Direktzugriff 48 mit dem Betriebsartenkoordinator 46 in Verbindung, der seinerseits in bidirektionalem Datenaustausch 56 mit dem Scheduler 50 (DSM) steht. Die einzelnen Funktionen oder Funktionsblöcke 38, 40, 42 stehen des Weiteren in Verbindung mit der Stoppfreigabe 52 der Verbrennungskraftmaschine 18. Diese übermitteln ein Signal CO Eng_stop ENA an den Start/Stopp-Koordinator 54.

## Patentansprüche

1. Verfahren zur Einstellung von Betriebszuständen einer Verbrennungskraftmaschine (18) eines Hybridantriebes mit mindestens einem elektrischen Antrieb (20), einem Hybridkoordinator (10), einem Steuergerät (12, 30) für die Verbrennungskraftmaschine (18) mit in diesem ablaufenden Funktionen (38, 40, 42), **dadurch gekennzeichnet, dass** die Funktionen (38, 40, 42) des Steuergerätes (12, 30) der Verbrennungskraftmaschine (18) deren Lauffähigkeit begünstigende Betriebszustände (58) beim Hybridkoordinator (10), anfordern, der eine dementsprechende Änderung der Leistungsverteilung zwischen der Verbrennungskraftmaschine (18) und dem mindestens einen elektrischen Antrieb (20) vornimmt.

2. Verfahren gemäß Anspruch 1, **dadurch gekennzeichnet, dass** die in dem Steuergerät (12, 30) der Verbrennungskraftmaschine (18) ablaufenden Funktionen (38,40,42) Diagnosen oder Adaptionen sind.

3. Verfahren gemäß Anspruch 1 oder 2, **dadurch gekennzeichnet, dass** die die Lauffähigkeit der Verbrennungskraftmaschine (18) begünstigenden Betriebszustände (58) Leerlaufbetrieb, bestimmte Last/Drehzahlprofile, verschiedene Betriebspunkte im Hinblick auf Abgasemissionen und Kraftstoffverbrauch, hohe Drehmomente, Volllastanreicherung, kleine Drehmomente, eine Verschiebung des Zündwinkels, ein Drehmomentvorhalt, schneller Drehmomentaufbau, Schubabschaltungen, Schub, Normalbetrieb und/oder Motorstop, sind.

4. Verfahren gemäß Anspruch 1, 2 oder 3, **dadurch gekennzeichnet, dass** während der Änderung der Leistungsverteilung zwischen der Verbrennungskraftmaschine (18) und der mindestens einen E-Antrieb (20) ein gefordertes Getriebeausgangsmoment M_out_ erzeugt und eine geforderte Fahrzeuggeschwindigkeit eingehalten werden.

5. Verfahren gemäß Anspruch 1, 2 oder 3, **dadurch gekennzeichnet, dass** der Hybridkoordinator (10) ständig mögliche Betriebszustände oder Betriebsbereiche der Verbrennungskraftmaschine (18) an einen Koordinator (30) der Verbrennungskraftmaschine (18) oder einen Scheduler (50) übermittelt.

6. Verfahren gemäß Anspruch 5, **dadurch gekennzeichnet, dass** jede der Funktionen (38, 40, 42) oder der Scheduler (50), für jede der Funktionen (38, 40, die Kompatibilität ihrer Anforderungen mit den möglichen Betriebszuständen oder möglichen Betriebsbereichen (34) der Verbrennungskraftmaschine (18) überprüft.

7. Verfahren gemäß Anspruch 5, **dadurch gekennzeichnet, dass** eine jede der Funktionen (38,40,42) ihre Laufbereitschaft an den Scheduler (50) mittels eines Signals B_py 38, B_py 40 oder B_py 42 übermittelt oder ihre Laufbereitschaft bei einem bestimmten Betriebspunkt oder Betriebsbereich mittels eines Signals B_pyt 38, B_pyt 40 oder B_pyt 42 übermittelt

8. Verfahren gemäß Anspruch 6, **dadurch gekennzeichnet, dass** der Scheduler (50) aus den mit den möglichen Betriebszuständen (34) oder den möglichen Betriebsbereichen der Verbrennungskraftmaschine (18) kompatiblen Funktionen (38, 40, 42) diejenige mit der höchsten Priorität auswählt.

9. Verfahren gemäß Anspruch 8, **dadurch gekennzeichnet, dass** die ausgewählte Funktion 38, 40, 42) ihre Betriebspunktanforderung (58) an den Hybridkoordinator (10) übermittelt

10. Verfahren gemäß Anspruch 6, **dadurch gekennzeichnet, dass** der Scheduler (50) diejenige der Funktionen (38,40,42) mit der höchsten Priorität ermittelt und deren mögliche Betriebspunkte und/oder mögliche Betriebszustände an den Hybridkoordinator (10) übermittelt.

11. Verfahren gemäß Anspruch 1, 2 oder 3, **dadurch gekennzeichnet, dass** im Hybridkoordinator (10) eine maximale zeitliche Dauer für einen Betriebspunkt und/oder einen Betriebsbereich (34) der Verbrennungskraftmaschine (18) ermittelt wird, die entweder an den Koordinator (30) für die Funktionen (38, 40, 42) oder an den Scheduler (50) übermittelt wird.

12. Verfahren gemäß Anspruch 10, **dadurch gekennzeichnet, dass** der Hybridkoordinator (10) bei der Änderung des Fahrzustandes die möglichen Betriebspunkte oder Betriebszustände (34) der Verbrennungskraftmaschine (18) anpasst und ein Wechsel zwischen verschiedenen Betriebszuständen (34), Schub, Leerlauf, Normalbetrieb oder Motorstop und/oder Betriebspunkten der Verbrennungskraftmaschine (18) ohne Änderung des Cetriebeausgangsmarrterites M_out und ohne Änderung einer Getriebeausgangsdrehzahl n_out erfolgt.

## Claims

1. Method for setting operating states of an internal combustion engine (18) of a hybrid drive having at least one electric drive (20), one hybrid coordinator (10), and one control unit (12, 30) for the internal combustion engine (18) with functions (38, 40, 42) running therein, **characterized in that** the functions (38, 40, 42) of the control unit (12, 30) of the internal combustion engine (18) request from the hybrid coordinator (10) operating states (58) which promote the running capability of the internal combustion engine (18), which hybrid coordinator brings about a corresponding change in the power distribution between the internal combustion engine (18) and the at least one electric drive (20).

2. Method according to Claim 1, **characterized in that** the functions (38, 40, 42) running in the control unit (12, 30) of the internal combustion engine (18) are diagnoses or adaptations.

3. Method according to Claim 1 or 2, **characterized in that** the operating states (58) which favour the running capability of the internal combustion engine (18) are idling mode, specific load/rotational speed profiles, various operating points in respect of exhaust gas emissions and fuel consumption, high torques, full load enrichment, low torques, displacement of the ignition angle, torque reserve, rapid torque build up, overrun fuel cutoff, thrust, normal operating mode and/or engine stop.

4. Method according to Claim 1, 2 or 3, **characterized in that** during the change in the power distribution between the internal combustion engine (18) and the at least one E-drive (20), a requested transmission output torque M_out_ is generated and a requested vehicle speed is maintained.

5. Method according to Claim 1, 2 or 3, **characterized in that** the hybrid coordinator (10) continuously transmits possible operating states or operating ranges of the internal combustion engine (18) to a coordinator (30) of the internal combustion engine (18) or to a scheduler (50).

6. Method according to Claim 5, **characterized in that** each of the functions (38, 40, 42) or the scheduler (50) for each of the functions (38, 40, 42) checks the compatibility of its requests with the possible operating states or possible operating ranges (34) of the internal combustion engine (18).

7. Method according to Claim 5, **characterized in that** each of the functions (38, 40, 42) signals its running readiness state to the scheduler (50) by means of a signal B_py 38, B_py 40 or B_py 42 or signals its running readiness state at a certain operating point or in a certain operating range by means of a signal B_pyt 38, B_pyt 40 or B_pyt 42.

8. Method according to Claim 6, **characterized in that** the scheduler (50) selects, from the functions (38, 40, 42) which are compatible with the possible operating states (34) or the possible operating ranges of the internal combustion engine (18), those with the highest priority.

9. Method according to Claim 8, **characterized in that** the selected function (38, 40, 42) signals its operating point of request (58) to the hybrid coordinator (10).

10. Method according to Claim 6, **characterized in that** the scheduler (50) determines the functions (38, 40, 42) with the highest priority and signals their possible operating points and/or possible operating states to the hybrid coordinator (10).

11. Method according to Claim 1, 2 or 3, **characterized in that** in the hybrid coordinator (10) a maximum chronological duration for an operating point and/or an operating range (34) of the internal combustion engine (18) is determined and is signalled either to the coordinator (30) for the functions (38, 40, 42) or to the scheduler (50).

12. Method according to Claim 10, **characterized in that**, when the driving state changes, the hybrid coordinator (10) adapts the possible operating points or operating states (34) of the internal combustion engine (18) and a changeover between various operating states (34) of thrust, idling, normal operating mode or engine stop and/or operating points of the internal combustion engine (18) without a change in the transmission output torque M_out and without a change in a transmission output rotational speed n_out takes place.

## Revendications

1. Procédé pour ajuster des états de fonctionnement d'un moteur à combustion interne (18) d'un entraînement hybride comprenant au moins un entraînement électrique (20), un coordinateur hybride (10), un appareil de commande (12, 30) pour le moteur à combustion interne (18) avec des fonctions (38, 40, 42) exécutées dans celui-ci, **caractérisé en ce que** les fonctions (38, 40, 42) de l'appareil de commande (12, 30) du moteur à combustion interne (18) demandent des états de fonctionnement (58) favorisant sa capacité à tourner au coordinateur hybride (10), qui effectue une modification correspondante de la répartition de charge entre le moteur à combustion interne (18) et l'au moins un entraînement électrique (20).

2. Procédé selon la revendication 1, **caractérisé en ce que** les fonctions (38, 40, 42) exécutées dans l'appareil de commande (12, 30) du moteur à combustion interne (18) sont des diagnostics ou des adaptations.

3. Procédé selon la revendication 1 ou 2, **caractérisé en ce que** les états de fonctionnement (58) favorisant la capacité à tourner du moteur à combustion interne (18) sont le fonctionnement au ralenti, des profils de charge/régime déterminés, différents points de fonctionnement en termes d'émissions de gaz d'échappement et de consommation de carburant, des couples élevés, un enrichissement à pleine charge, de petits couples, un décalage de l'angle d'allumage, un maintien du couple, une augmentation rapide du couple, des coupures d'alimentation en poussée, un mode de poussée, un fonctionnement normal et/ou un arrêt du moteur.

4. Procédé selon la revendication 1, 2, ou 3, **caractérisé en ce que** pendant la modification de la répartition de puissance entre le moteur à combustion interne (18) et l'au moins un entraînement électrique (20), un couple de sortie de boîte de vitesses exigé M_out_ est produit et une vitesse de véhicule exigée est maintenue.

5. Procédé selon la revendication 1, 2 ou 3, **caractérisé en ce que** le coordinateur hybride (10) transmet en continu des états de fonctionnement possibles ou des plages de fonctionnement du moteur à combustion interne (18) à un coordinateur (30) du moteur à combustion interne (18) ou à un programmateur (50).

6. Procédé selon la revendication 5, **caractérisé en ce que** chacune des fonctions (38, 40, 42) ou le programmateur (50) pour chacune des fonctions (38, 40, 42) vérifie la compatibilité de ses demandes avec les états de fonctionnement possibles ou les plages de fonctionnement possibles (34) du moteur à combustion interne (18).

7. Procédé selon la revendication 5, **caractérisé en ce que** chacune des fonctions (38, 40, 42) transmet son état prêt à l'exécution au programmateur (50) au moyen d'un signal B_py 38, B_py 40 ou B_py 42, ou son état prêt à l'exécution à un point de fonctionnement déterminé ou une plage de fonctionnement déterminée au moyen d'un signal B_pyt 38, B_pyt 40 ou B_pyt 42.

8. Procédé selon la revendication 6, **caractérisé en ce que** le programmateur (50) sélectionne, à partir des fonctions compatibles (38, 40, 42) avec les états de fonctionnement possibles (34) ou les plages de fonctionnement possibles du moteur à combustion interne (18), celle qui a la plus grande priorité.

9. Procédé selon la revendication 8, **caractérisé en ce que** la fonction sélectionnée (38, 40, 42) transmet sa demande de point de fonctionnement (58) au coordinateur hybride (10).

10. Procédé selon la revendication 6, **caractérisé en ce que** le programmateur (50) détermine laquelle des fonctions (38, 40, 42) a la plus grande priorité et transmet ses points de fonctionnement possibles et/ou ses états de fonctionnement possibles au coordinateur hybride (10).

11. Procédé selon la revendication 1, 2 ou 3, **caractérisé en ce qu'**une durée maximale pour un point de fonctionnement et/ou une plage de fonctionnement (34) du moteur à combustion interne (18) est déterminée dans le coordinateur hybride (10), laquelle est transmise soit au coordinateur (30) pour les fonctions (38, 40, 42) soit au programmateur (50).

12. Procédé selon la revendication 10, **caractérisé en ce que** le coordinateur hybride (10), en cas de modification de l'état de conduite, adapte les points de fonctionnement possibles ou les états de fonctionnement possibles (34) du moteur à combustion interne (18) et un changement entre différents états de fonctionnement (34), le mode de poussée, le ralenti, le fonctionnement normal ou l'arrêt du moteur et/ou des points de fonctionnement du moteur à combustion interne (18) a lieu sans modifier le couple de sortie de la boîte de vitesses M_out et sans modifier le régime de sortie de la boîte de vitesses n_out.
